(19) **Europäisches Patentamt**
**European Patent Office**
**Office européen des brevets**

(11) **EP 3 238 176 B1**

(12) **EUROPEAN PATENT SPECIFICATION**

(45) Date of publication and mention
of the grant of the patent:
**01.11.2023 Bulletin 2023/44**

(21) Application number: **14907837.0**

(22) Date of filing: **11.12.2014**

(51) International Patent Classification (IPC):
**A63F 13/655** $^{(2014.01)}$   **G06T 13/40** $^{(2011.01)}$
**A63F 13/795** $^{(2014.01)}$

(52) Cooperative Patent Classification (CPC):
**A63F 13/655; A63F 13/213; A63F 13/58;**
**A63F 13/795; G06Q 10/10; G06Q 30/0269;**
A63F 2300/5553

(86) International application number:
**PCT/CN2014/093596**

(87) International publication number:
**WO 2016/090605 (16.06.2016 Gazette 2016/24)**

(54) **AVATAR SELECTION MECHANISM**

AVATARAUSWAHLMECHANISMUS

MÉCANISME DE SÉLECTION D'AVATARS

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**01.11.2017 Bulletin 2017/44**

(73) Proprietor: **Intel Corporation**
**Santa Clara, California 95054 (US)**

(72) Inventors:
• **ZHANG, Lidan**
**Beijing 11 100080 (CN)**
• **TONG, Xiaofeng**
**Beijing 11 100086 (CN)**
• **DU, Yangzhou**
**Beijing 11 101304 (CN)**
• **LI, Wenlong**
**Beijing 100028 (CN)**
• **SHEN, Xiaolu**
**Beijing 11 100012 (CN)**
• **MORRIS, Margaret E.**
**Portland, Oregon 97209 (US)**

• **ANDERSON, Glen J.**
**Beaverton, Oregon 97006 (US)**

(74) Representative: **HGF**
**HGF Limited**
**1 City Walk**
**Leeds LS11 9DX (GB)**

(56) References cited:
**EP-B1- 1 900 405          WO-A1-2013/152454**
**CN-A- 103 093 490      JP-A- 2012 190 112**
**US-A1- 2008 158 232   US-A1- 2010 185 981**
**US-A1- 2011 007 142   US-A1- 2013 290 905**
**US-A1- 2014 229 850   US-A1- 2014 267 413**
**US-B1- 7 468 729**

• **Chi-Hyoung Rhee ET AL: "Cartoon-like Avatar**
**Generation Using Facial Component Matching",**
**International Journal of Multimedia and**
**Ubiquitous Engineering, 30 July 2013**
**(2013-07-30), pages 69-78, XP055177267,**
**Retrieved from the Internet:**
**URL:http://www.earticle.net/Article.aspx?s**
**n=202320**

**Description**

<u>FIELD</u>

Embodiments described herein generally relate to computers. More particularly, embodiments relate to a mechanism for recommending and selecting avatars. The invention is defined by the appended set of claims, which provides for an apparatus to facilitate dynamic selection of avatars according to claim 1, a method to facilitate dynamic selection of avatars according to claim 9, and at least one machine-readable medium according to claim 13. The dependent claims define preferred embodiments.

<u>BACKGROUND</u>

Avatars are well known and widely used in various systems and software applications, such as telecommunication applications, user interface applications, computer games, etc. An avatar may refer to an animated version of a human face, an animal face, a cartoon face, etc. Avatars are often used by users who wish to preserve their privacy by not revealing their real face.

With the advancement of computer vision and processing power, facial performance driven avatar animation is feasible on mobile devices such that users may morph their facial actions on avatars. However, avatar stores for mobile applications are currently not organized to meet a user's preference. For instance, users of avatar mobile applications are typically provided the same lists of avatars. Moreover, current applications feature avatars that may not resonate with a particular user's intended audience. Specifically, a selected avatar may inadvertently offend someone due to cultural norms or come across as clueless, out of date, etc.

Chi-Hyoung Rhee et al: 'Cartoon-like Avatar Generation Using Facial Component Matching', International Journal of Multimedia and Ubiquitous Engineering, 30 July 2013 (2013-07-30), pages 69-78, XP055177267 discloses a method of generating avatars that matches the most similar avatar components to a plurality of facial features and then composites the matched components.

JP 2012 190112 A (NEC CASIO MOBILE COMM LTD, 2012-10-04) discloses a mobile phone which tracks a user's facial expression to derive the user's current emotion. Emojis matching this emotion are prioritized on a GUI tab in an email application for faster insertion into email text.

<u>BRIEF DESCRIPTION OF THE DRAWINGS</u>

Embodiments are illustrated by way of example, and not by way of limitation, in the figures of the accompanying drawings in which like reference numerals refer to similar elements.

> **Figure 1** illustrates an avatar simulation mechanism at a computing device according to one embodiment.
> **Figure 2** illustrates an avatar selection mechanism according to one embodiment.
> **Figure 3** illustrates an avatar determination mechanism according to one embodiment.
> **Figure 4** is a flow diagram illustrating the operation of an avatar determination mechanism according to one embodiment.
> **Figures 5A &5B** illustrate snapshots of a conventional avatar recommendation application.
> **Figure 6** illustrates an avatar recommendation mechanism according to one embodiment.
> **Figures 7A-7C** illustrate embodiments of implementation of an avatar recommendation mechanism.
> **Figure 8** is a flow diagram illustrating the operation of an avatar recommendation mechanism according to one embodiment.
> **Figure 9** illustrates computer system suitable for implementing embodiments of the present disclosure according to one embodiment.

<u>DETAILED DESCRIPTION</u>

In the following description, numerous specific details are set forth. However, embodiments, as described herein, may be practiced without these specific details. In other instances, well-known circuits, structures and techniques have not been shown in details in order not to obscure the understanding of this description.

Embodiments provide for selection of avatars that that effectively represent a user, and are aligned with an audience's culture, age and preferences. In such embodiments, avatar selection considers profile information of senders and/or an intended audience (e.g., demographic information, tastes, social network) for selection of the sender's avatar. In further embodiments, avatar selection may further be optimized by analysis of communication dynamics and conversation topics. In such embodiments, avatar selection is tailored according to popular trends pertinent to the conversation, as well as an analysis of users' emotional states and interpersonal dynamics. In still further embodiments, the appearance of avatars may be manipulated as a form of playful communication.

Embodiments also provide for facial driven avatar recommendation. In such embodiments, a personalized recommendation list of avatars is provided by inferring user preference from a camera input. The personalized recommendation list is generated by learning both user attributes and similarities between avatar models and facial input. Embodiments implement camera input of a user's face to analyze facial attributes (e.g., facial shape, gender, age, emotion, face shape, eyewear, hair style, etc.). In consideration of these attributes, along with a user's surrounding environment factors, a ranking score of available avatars is calculated and a recommendation list of avatar models is provided to the user. In further embodiments, the list may be periodically changed upon detecting a change in depending factors or attributes.

It is to be noted that although a human face is used as an example throughout the document for the sake of brevity, clarity, and ease of understanding, embodiments are not limited in that manner and that the term user may refer to a single person, multiple persons, other living beings (e.g., dogs, cats, plants, etc.), and even non-living objects (e.g., statues, televisions, musical instruments, etc.). Further, for example, embodiments may be applied not only to the face of a single person, but that embodiments are equally applicable to and compatible with a group of persons, not merely limited to their faces, along with their pets and/or other objects, etc. Similarly, embodiments are not limited to a single computing device or a particular type of computing device, such as a smartphone, but that any number and type of devices may be used, such as computing devices with multiple or extend displays, small screens, big screens, and even massive screens, such as store displays, magic mirrors, having the ability to depth track any number and form of persons, pets, objects, etc., may be used.

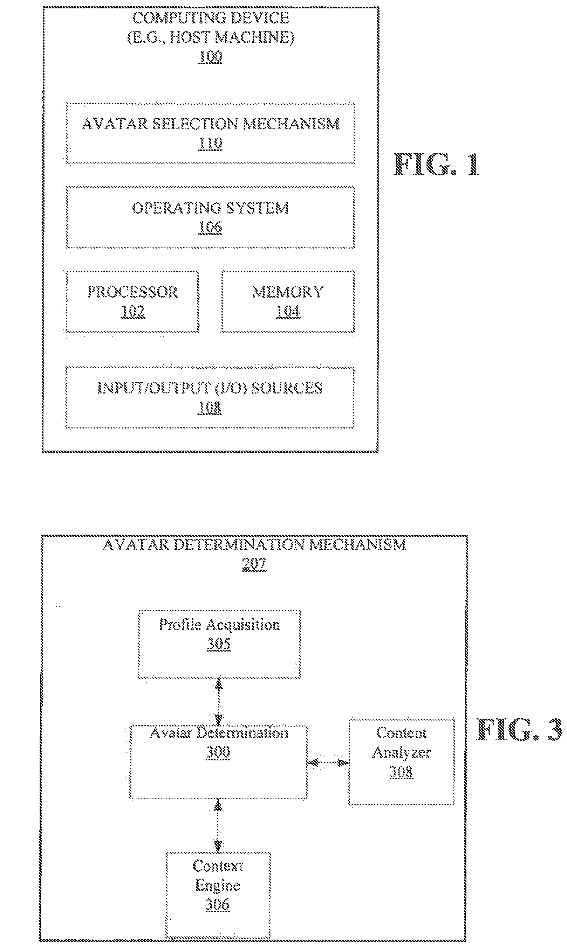

**Figure 1** illustrates an avatar selection mechanism 110 at a computing device 100 according to one embodiment. In one embodiment, computing device 100 serves as a host machine for hosting avatar selection mechanism ("avatar mechanism") 110 that includes a combination of any number and type of components for facilitating dynamic determination and/or recommendation of avatars at computing devices, such as computing device 100. Computing device 100 may include large computing systems, such as server computers, desktop computers, etc., and may further include set-top boxes (e.g., Internet-based cable television set-top boxes, etc.), global positioning system (GPS)-based devices, etc. Computing device 100 may include mobile computing devices, such as cellular phones including smartphones (e.g., iPhone® by Apple®, BlackBerry® by Research in Motion®, etc.), personal digital assistants (PDAs), tablet computers (e.g., iPad® by Apple®, Galaxy 3® by Samsung®, etc.), laptop computers (e.g., notebook, netbook, Ultrabook™, etc.), e-readers (e.g., Kindle® by Amazon®, Nook® by Barnes and Nobles®, etc.), etc.

Computing device 100 may include an operating system (OS) 106 serving as an interface between hardware and/or physical resources of the computer device 100 and a user. Computing device 100 further includes one or more processors 102, memory devices 104, network devices, drivers, or the like, as well as input/output (I/O) sources 108, such as touchscreens, touch panels, touch pads, virtual or regular keyboards, virtual or regular mice, etc. It is to be noted that terms like "node", "computing node", "server", "server device", "cloud computer", "cloud server", "cloud server computer", "machine", "host machine", "device", "computing device", "computer", "computing system", and the like, may be used interchangeably throughout this document. It is to be further noted that terms like "application", "software application", "program", "software program", "package", and "software package" may be used interchangeably throughout this document. Similarly, terms like "job", "input", "request" and "message" may be used interchangeably throughout this document.

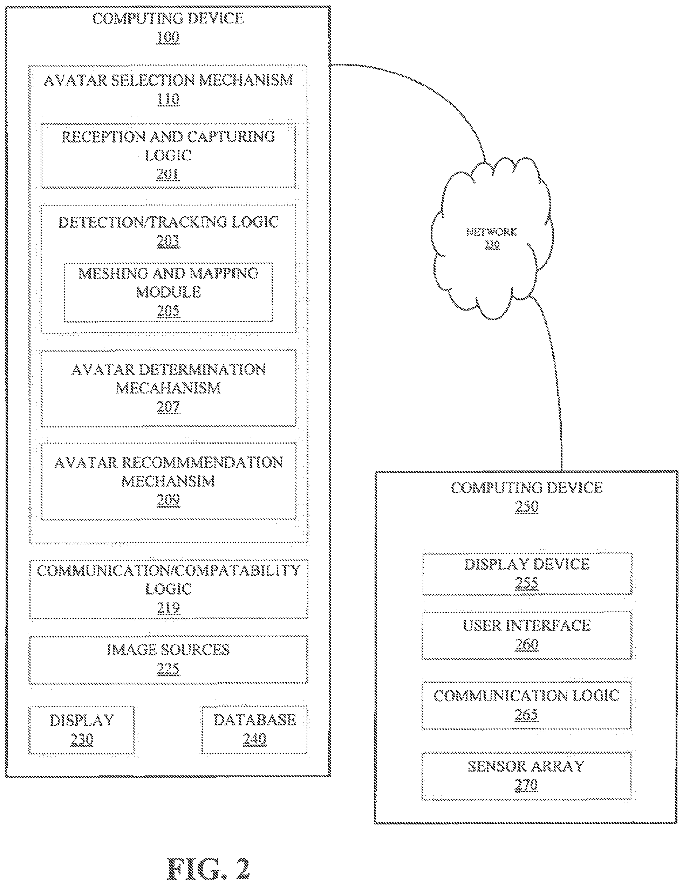

**Figure 2** illustrates an avatar mechanism 110 according to one embodiment. In one embodiment, avatar mechanism 110 may be employed at computing device 100, such as a laptop computer, a desktop computer, a smartphone, a tablet computer, etc. In one embodiment, avatar mechanism 110 may include any number and type of components, such as: reception and capturing logic 201, detection/tracking logic 203 including meshing and mapping module 205, avatar determination mechanism 207, avatar recommendation mechanism 209 and communication/compatibility logic 219

In one embodiment, reception and capturing logic 201 facilitates an image capturing device implemented at image sources 225 at computing device 100 to receive and capture an image associated with a user, such as a live and real-time image of the user's face. As the live image of the user's face is received and captured, the user's face and its movements and expressions may be continuously, and in real-time, detected and tracked in live video frames by detection/tracking logic 203.

The detecting and tracking of the user's face and its movements and expressions as performed by detection/tracking logic 203 may include detecting the user's face and determining various features of the face, such as positions of feature points, which may then be used to determine facial expression movements and head rigid movements. Further, based on these features, similar expression features may be accessed at and retrieved from a motion capture database, such as database 240. For more details, see U.S. Patent Application No. 13/977,682, filed June 29, 2013, U.S. National Phase of PCT/CN2011/072603, filed April 11, 2011, entitled Avatar Facial Expression Techniques, by Yangzhou Du, et al.

In some embodiments, database 240 may be used to record, store, and maintain data relating to various human facial expressions, such a smile, frown, laugh, cry, anger, happy, surprise, speak, silent, eat, drink, sing, yawn sneeze, and the like. These expressions may be recorded as sequences of frames where each frame may include multiple features, such as the following nine features: 1) distance between upper and lower lips; 2) distance between two mouth corners; 3) distance between upper lip and nose tip; 4) distance between lower lip and nose tip; 5) distance between nose-wing and nose tip; 6) distance between upper and lower eyelids; 7) distance between eyebrow tip and nose-tip; 8) distance between two eyebrow tips; and 9) distance between eyebrow tip and eyebrow middle. Database 240 may include a data source, an information storage medium, such as memory (volatile or non-volatile), disk storage, optical storage, etc.

In one embodiment, based on the features retrieved from database 240, meshing and mapping module 205 employs a three-dimensional (3D) mesh to locate various facial points and maps them to the corresponding avatar. This may involve normalizing and remapping the human face to the avatar face, copying the facial expression changes to the avatar, and then driving the avatar to perform the same facial expression changes as in the retrieved features. In embodiments, meshing and mapping module 205 may include graphics rendering features that allow the avatar to be output by a display device 230 associated with computing device 100. For example, display screen or device 230 may visually output the avatar to the user and similarly, one or more display devices, such as display device 255, associated with one or more other computing devices, such as computing device 250, may display the same simulated avatar to their respective users. Further, display device 230 may be implemented with various display(s) including (but are not limited to) liquid crystal displays (LCDs), light emitting diode (LED) displays, plasma displays, and cathode ray tube (CRT) displays.

Computing device 250 may be in communication with computing device 100 over one or more networks, such as network 270 (e.g., cloud network, the Internet, intranet, cellular network, proximity or near proximity networks, etc.). Computing device 250 may further include user interface 260, communication logic 265, and one or more software applications including avatar mechanism 110.

In embodiments, detection/tracking logic 203 may receive image data from image source 225, where the image data may be in the form of a sequence of images or frames (e.g., video frames). Image sources 225 may include an image capturing device, such as a camera. Such a device may include various components, such as (but are not limited to) an optics assembly, an image sensor, an image/video encoder, etc., that may be implemented in any combination of hardware and/or software. The optics assembly may include one or more optical devices (e.g., lenses, mirrors, etc.) to project an image within a field of view onto multiple sensor elements within the image sensor. In addition, the optics assembly may include one or more mechanisms to control the arrangement of these optical device(s). For example, such mechanisms may control focusing operations, aperture settings, exposure settings, zooming operations, shutter speed, effective focal length, etc. Embodiments, however, are not limited to these examples.

In an avatar-based system (e.g., a video chatting system), it is important to capture a user's head gestures, as well as the user's facial expressions. In embodiments, these operations may be performed by detection/tracking logic 203. In turn, these gestures and expressions may be expressed as animation parameters, where such animation parameters are transferred to meshing and mapping module 205 for rendering. In this way, the avatar system may be able to reproduce the original user's facial expression on a virtual 3D model.

In some embodiments, a practical solution for detection/tracking logic 203 may provide various features. For instance, detection/tracking logic 203 may track rigid movement due to head gestures. Such rigid movement may include (but is not limited to) translation, rotation and scaling factors. Also, detection/tracking logic 203 may track non-rigid transformation due to facial expressions, where the non-rigid transformations may include multiple facial action units (e.g., six typical facial action units). Further, detection/tracking logic 203 may be optimized in its implementation to run in real-time on one or more processors (e.g., on Intel Atom 1.6 GHz processors).

Image sources 225 may further include one or more image sensors including an array of sensor elements where these elements may be complementary metal oxide semiconductor (CMOS) sensors, charge coupled devices (CCDs), or other suitable sensor element types. These elements may generate analog intensity signals (e.g., voltages), which correspond to light incident upon the sensor. In addition, the image sensor may also include analog-to-digital converter(s) ADC(s) that convert the analog intensity signals into digitally encoded intensity values. Embodiments, however, are not limited to these examples. For example, an image sensor converts light received through optics assembly into pixel values, where each of these pixel values represents a particular light intensity at the corresponding sensor element. Although these pixel values have been described as digital, they may alternatively be analog. As described above, the image sensing device may include an image/video encoder to encode and/or compress pixel values. Various techniques, standards, and/or formats (e.g., Moving Picture Experts Group (MPEG), Joint Photographic Expert Group (JPEG), etc.) may be employed for this encoding and/or compression.

As aforementioned, image sources 225 may be any number and type of components, such as image capturing devices (e.g., one or more cameras, etc.) and image sensing devices, such as (but not limited to) context-aware sensors (e.g., temperature sensors, facial expression and feature measurement sensors working with one or more cameras, environment sensors (such as to sense background colors, lights, etc.), biometric sensors (such as to detect fingerprints, facial points or features, etc.), and the like. Computing device 100 may also include one or more software applications, such as business applications, social network websites (e.g., Facebook®, Google+®, Twitter®, etc.), business networking websites (e.g., LinkedIn®, etc.), communication applications (e.g., Skype®, Tango®, Viber®, etc.), games and other entertainment applications, etc., offering one or more user interfaces (e.g., web user interface (WUI), graphical user interface (GUI), touchscreen, etc.) to display the avatar and for the user to communicate with other users at other computing device 250, while ensuring compatibility with changing technologies, parameters, protocols, standards, etc.

Communication/compatibility logic 219 may be used to facilitate dynamic communication and compatibility between various computing devices, such as computing device 100 and computing devices 250 (such as a mobile computing device, a desktop computer, a server computing device, etc.), storage devices, databases and/or data sources, such as database 240, networks, such as network 270 (e.g., cloud network, the Internet, intranet, cellular network, proximity networks, such as Bluetooth, Bluetooth low energy (BLE), Bluetooth Smart, Wi-Fi proximity, Radio Frequency Identification (RFID), Near Field Communication (NFC), Body Area Network (BAN), etc.), connectivity and location management techniques, software applications/websites, (e.g., social and/or business networking websites, such as Facebook®, LinkedIn®, Google+®, Twitter®, etc., business applications, games and other entertainment applications, etc.), programming languages, etc., while ensuring compatibility with changing technologies, parameters, protocols, standards, etc.

It is contemplated that any number and type of components 201-219 of avatar mechanism 110 may not necessarily be at a single computing device and may be allocated among or distributed between any number and type of computing devices, including computing devices 100, 250 having (but are not limited to) server computing devices, cameras, PDAs, mobile phones (e.g., smartphones, tablet computers, etc.), personal computing devices (e.g., desktop devices, laptop computers, etc.), smart televisions, servers, wearable devices, media players, any smart computing devices, and so forth. Further examples include microprocessors, graphics processors or engines, microcontrollers, application specific integrated circuits (ASICs), and so forth. Embodiments, however, are not limited to these examples.

Communication logic 265 of computing devices 250 may be similar to or the same as communication/compatibility logic 219 of computing device 100 and may be used to facilitate communication between avatar mechanism 110 at computing device 100 and one or more software applications at computing devices 250 for communication of avatars over one or more networks, such as network 270. Further, logic 265, 219 may be arranged or configured to use any one or more of communication technologies, such as wireless or wired communications and relevant protocols (e.g., Wi-Fi®, WiMAX, Ethernet, etc.), to facilitate communication over one or more networks, such as network 270 (e.g., Internet, intranet, cloud network, proximity network (e.g., Bluetooth, etc.). Database 240 may include any number and type of devices or mediums (such as data storage devices, hard drives, solid-state drives, hard disks, memory cards or devices, memory circuits, etc.) for short-time and/or long-term storage of data (e.g., patient information, customization parameters, process protocols, etc.), policies, resources, software programs or instructions, etc. Each of computing device 250 may also include a memory and/or storage medium for storing, maintaining, and/or caching of data, including avatars and other relevant information, such as facial feature points, etc.

Although one or more examples (e.g., a single human face, mobile computing device, etc.) may be discussed throughout this document for brevity, clarity, and ease of understanding, it is contemplated that embodiments are not limited to any particular number and type of users, avatars, forms of access to resources or computing devices, users, network or authentication protocols or processes, or the like. For example, embodiments are not limited to any particular network security infrastructures or protocols (e.g., single-sign-on (SSO) infrastructures and protocols) and may be compatible with any number and type of network security infrastructures and protocols, such as security assertion markup language (SAML), OAuth, Kerberos, etc.

Throughout this document, terms like "logic", "component", "module", "framework", "engine", "point", and the like, may be referenced interchangeably and include, by way of example, software, hardware, and/or any combination of software and hardware, such as firmware. Further, any use of a particular brand, word, term, phrase, name, and/or acronym, such as "avatar", "avatar scale factor", "scaling", "animation", "human face", "facial feature points", "zooming-in", "zooming-cut", etc., should not be read to limit embodiments to software or devices that carry that label in products or in literature external to this document.

It is contemplated that any number and type of components may be added to and/or removed from avatar simulation mechanism 110 to facilitate various embodiments including adding, removing, and/or enhancing certain features. For brevity, clarity, and ease of understanding of avatar simulation mechanism 110, many of the standard and/or known components, such as those of a computing device, are not shown or discussed here. It is contemplated that embodiments, as described herein, are not limited to any particular technology, topology, system, architecture, and/or standard and are dynamic enough to adopt and adapt to any future changes.

According to one embodiment, user face and movement data acquired by detection/tracking logic 203 may be used by avatar determination mechanism 207 to select and manipulate an avatar. In other embodiment, the data may be received at avatar recommendation mechanism 209, which provides a list of multiple avatars as recommendations.

AVATAR SELECTION

**Figure 3** illustrates one embodiment of an avatar determination mechanism 207. Avatar determination mechanism 207 selects avatars that effectively represent a user, and are aligned with an audience's culture, age and preferences. According to one embodiment, avatar determination mechanism 207 receives and considers user profile information and profile information of an intended audience (e.g., demographic information, tastes, social network) in order to select an avatar. In one embodiment, avatar determination mechanism 207 includes avatar determination module 300, profile acquisition module 305, context engine 306 and content analyzer 308.

According to one embodiment, avatar determination module 300 selects an avatar based on user face and movement information received from detection/tracking logic 203, sender and recipient profile information received from profile acquisition module 305, context information received from context engine 306 and information received from content analyzer 308. In one embodiment, detection/tracking logic 203 uses data from sensor arrays to monitor facial expressions of the sender to infer emotional reactions and other expressions. Additionally, voice characteristics, and other attributes of the sender may be monitored to infer emotions. In a further embodiment, avatar determination module 300 may also receive sensory array data from the recipient device (e.g., computing device 250) to infer the emotional reactions of the recipient prior to selecting an avatar.

In one embodiment, profile acquisition module 305 acquires profile information for the sender and one or more recipients whom are to receive the avatar. In such an embodiment, profile acquisitionmodule 305 may extract information from one or more network sources, such as social network websites (e.g., Facebook®, Google+®, Twitter®, etc.), business networking websites (e.g., LinkedIn®, etc.), communication applications (e.g., Skype®, Tango®, Viber®, etc.) and service providers (e.g., Hulu®, Netflix®, Amazon®, etc.) via network 230. In a further embodiment, avatar selection may be determined by social influences shared by the sender and one or more recipients. For instance, an avatar may be selected based on the avatar selections of people that the sender or the sender's communication partners follow on Twitter®.

Context engine 306 acquires information related to the current circumstances of the user and/or message recipient. For instance, context engine 306 may determine social circumstances of a recipient (e.g., alone), a current location (e.g., home or work), user activity (e.g., exercising) for the user and recipient and. Content analyzer 308 analyzes the content of messages between a sender and a recipient to determine sentiment and interpersonal dynamics (e.g., sadness or hostility).

As discussed above, avatar determination module 300 receives information from detection/tracking logic 203, profile acquisitionmodule 305, context engine 306 and content analyzer 308 for consideration in the selection of an avatar. According to one embodiment, avatar determination module 300 may infer intent of a sender based on information received profile acquisitionmodule 305. For example intent of the sender (e.g., friend, flirt, professional negotiation, marriage proposal, etc.) may be inferred based on a relationship between the sender and one or more recipients within a particular application, or in other social media (friends or friends of friends on Facebook®, recently met on Tinder®, colleagues on LinkedIn®, followers on Twitter®).

In another embodiment, avatar determination module 300 may map overlap between an avatar selection of the sender with tastes of the recipient. In such an embodiment, content analyzer 308 may analyze text for key topics prior to providing the information to avatar determination module 300. Subsequently, avatar determination module 300, may match words against social network pages to identify topically relevant avatars (e.g., if someone mentions the World Cup, avatar determination module 300 may respond with selecting an avatar of a famous soccer player). In one embodiment, analysis data received from content analyzer 308 may be used to assist communication partners in modifying avatars for teasing or negotiation. For instance, if a recipient is caught off guard by a hostile note or accusation, avatar determination module 300 may select an avatar of an unjustly accused character in a well-known film for a reply.

According to one embodiment, avatar determination module 300 uses contextual analysis received from context engine 306 as a factor in avatar selection. For example, the sender's social situation (e.g., whether the recipient is alone) may influence the appearance of the avatar. In a further embodiment, avatar determination module 300 conducts a cultural translation if there is no overlap. For example, where reference to a person as a devil in the United States means the person is a charming rascal, determination module 300 may select another option if the recipient is from a country where the term a devil would be offensive. As another example, avatar determination module 300 may select an avatar of a popular DJ in Brazil in a scenario in which a middle age blogger in the United States trying to connect with teenagers in Brazil has previously chosen Mick Jagger as an avatar.

According to one avatar determination module 300 automatically selects avatars from database 240 based on the above-described factors. In such an embodiment, database 140 includes three-dimensional (3D) models of characters provided by Intel® Pocket Avatars.

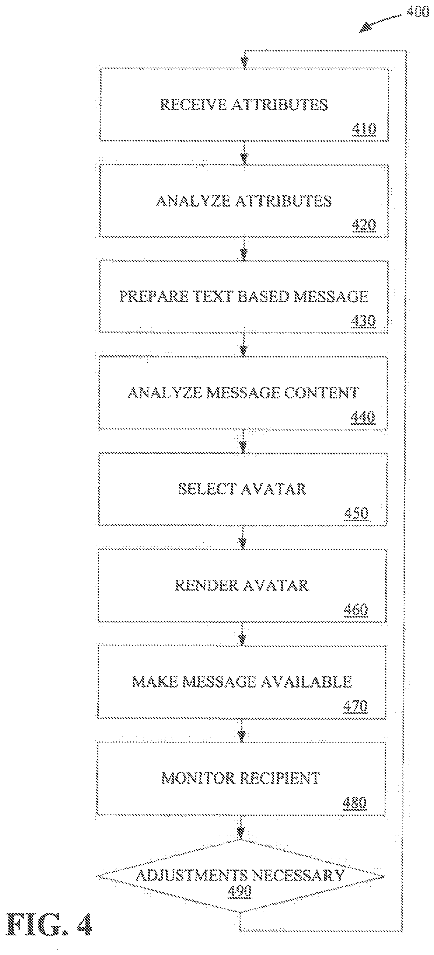

**Figure 4** is a flow diagram illustrating a method 400 for facilitating avatar determination mechanism at a computing device according to one embodiment. Method 400 may be performed by processing logic that may comprise hardware (e.g., circuitry, dedicated logic, programmable logic, etc.), software (such as instructions run on a processing device), or a combination thereof. In one embodiment, method 400 may be performed by avatar selection mechanism 110. The processes of method 400 are illustrated in linear sequences for brevity and clarity in presentation; however, it is contemplated that any number of them can be performed in parallel, asynchronously, or in different orders. For brevity, clarity, and ease of understanding, many of the details discussed with reference to **Figures 1** and **2** are not discussed or repeated here.

Method 400 begins at block 410 with receiving sender and receiver attributes at avatar detection mechanism 207. As discussed above, the attributes may comprise live, real-time, audio-video data, including a video image of a user (e.g., sender's and/or receiver's face), via one or more image sensors at a computing device. The attributes also may include information acquired by profile acquisitionmodule 305 and context engine 306. At block 420, the received data is analyzed as discussed above. At block 430, the sender prepares a text based message (text or voice) for transmission to one or more recipients. At block 440, avatar determination mechanism 207 analyzes the message content relative to the attributes. At block 450, an avatar is selected based on the analysis. At block 460, the avatar is rendered (e.g., at meshing and mapping module 205). At block 470, the message is made available for the recipient. At block 480, avatar determination mechanism 207 monitors the recipient reaction (e.g., via audio-video from the recipient's computing device). At block 490, a determination is made as to whether an adjustment is to be made based on the recipient's reaction. If so, control is returned to block 410 where updated attributes reflecting the recipient's reactions are received and subsequently analyzed.

As shown above, the avatar determination mechanism selects avatars that increase communication resonance by aligning profile information of a sender and an intended audience (demographic information, tastes, social network). The selection is tailored according to popular trends pertinent to a conversation, as well as an analysis of each users' emotional states and interpersonal dynamics. the avatar determination mechanism also guides users in manipulating the appearance of one another's avatars as a form of playful communication.

AVATAR RECOMMENDATION

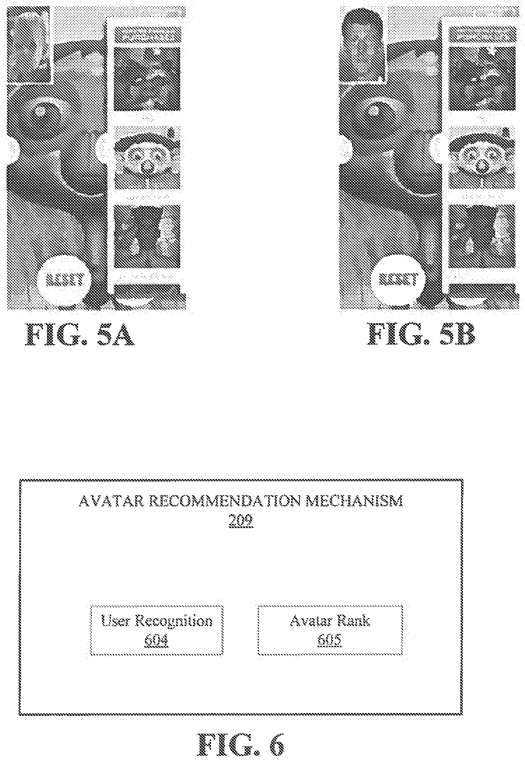

As discussed above, existing avatar applications do not provide suitable options that meet user preferences. **Figures 5A & 5B** illustrate snapshots of a conventional avatar recommendation application in which the same list of avatars is provided for a user shown in **Figure 5A** as for a user in **Figure 5B.**

According to one embodiment, avatar recommendation module 209 is implemented to provide facial driven avatars to enable a personalized list of avatar models for a user by inferring user preference directly from camera input. In such an embodiment, avatar recommendation module 209 generates a personalized recommendation list by learning user attributes and similarities between avatar models and facial input.

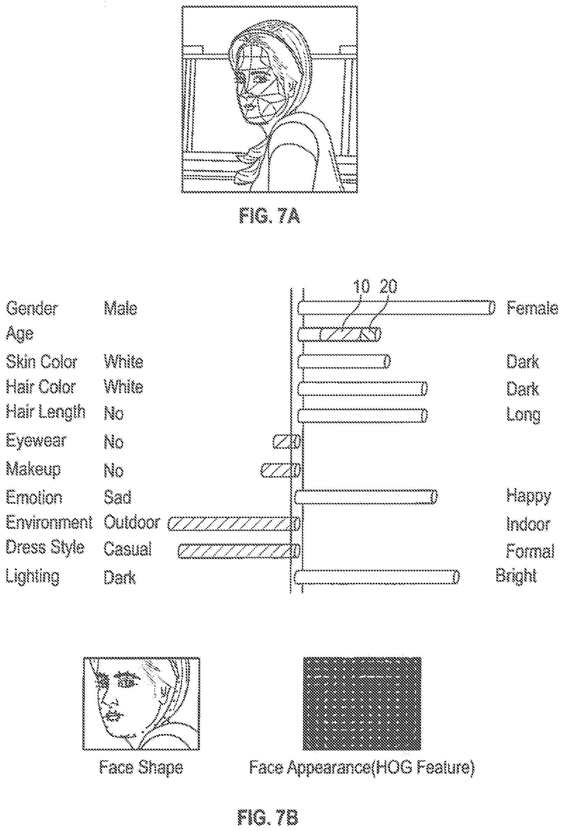

**Figure 6** illustrates one embodiment of an avatar recommendation module 209, which includes user recognition module 604 and avatar rank module 606. User recognition module 604 receives a user's extracted facial feature information (e.g., appearance and geometry features) from detection/tracking logic 203 in order to recognize the user's attributes. **Figure 7A** illustrates one embodiment of extracted features included in information received at user recognition module 604. In one embodiment, both appearance and geometry features are used to train an individual classifier for each target attribute. In such an embodiment, a machine learning classification method (e.g., Support Vector Machine (SVM)) is implemented to perform classifier training to obtain a model.

According to one embodiment, the model is applied to a first appearance of a user (e.g., an unseen case), resulting in an output the current user attributes. In a further embodiment, appearance features outside of the face box may also be extracted in order to determine a scene and/or check the user's dress style. In this embodiment, a visual descriptor (e.g., Histogram of oriented Gradients (HOG)) is used for the appearance of face and environment. Each user may be described according to 14 attributes: face shape, appearance, gender, age, skin color, hair color, hair length, eyewear, makeup degree, emotion, environment, lighting and dress style. **Figure 7B** illustrates one embodiment of user attribute analysis performed by user recognition module 604.

Avatar rank module 606 receives the attribute data from user recognition module 604 and ranks available avatar models at database 240 by integrating attribute similarity scores. In one embodiment, all attributes for a current user are considered to assign a score for each avatar figure. In such an embodiment, each avatar figure has values for all attributes. Subsequently, a matching between the user and avatar figure can be decomposed as matching in terms of individual attribute. In one embodiment, the attribute score is represented by:

$$\text{Score}_{\text{attribute}}(\text{user}, \text{avatar}) = \sum_{i=1}^{14} w_i \left| S_{\text{user}}^i - S_{\text{avatar}}^i \right|$$

where *i* denotes attribute, and

$$S_1 user^i \mid S_1 avatar^i \mid$$

denotes the score difference between user and avatar figure on the '-th attribute, w' is the weight parameter of the '-th attribute.

If an avatar model is similar to the user, the output score is smaller. In one embodiment, missing attributes may be ignored by setting a corresponding weight parameter to 0. For example, if a hat occludes the user's hair, the hair related attribute weight (e.g., color and length) should be set to 0.

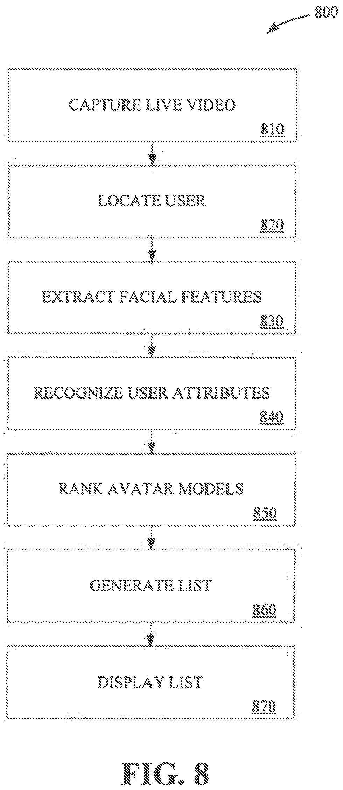

**Figure 8** is a flow diagram illustrating a method 800 for facilitating avatar recommendation mechanism at a computing device according to one embodiment. Method 800 may be performed by processing logic that may comprise hardware (e.g., circuitry, dedicated logic, programmable logic, etc.), software (such as instructions run on a processing device), or a combination thereof. In one embodiment, method 800 may be performed by avatar selection mechanism 110. The processes of method 800 are illustrated in linear sequences for brevity and clarity in presentation; however, it is contemplated that any number of them can be performed in parallel, asynchronously, or in different orders. For brevity, clarity, and ease of understanding, many of the details discussed with reference to **Figures 1** and **2** are not discussed or repeated here.

Method 800 begins at block 810 with capturing live videos from image sources 225 during operation of an avatar application, such as Intel® Pocket Avatars, Nito®, Mojo Masks®, etc. At block 820, a user's face is located in the video. In one embodiment, detection/tracking logic 203 detects whether an image in the video includes a face. In such an embodiment, the position of each face is represented with one bounding rectangle. Based on the face rectangle, different facial features (e.g., eye -brows, eyes, nose, mouth, hair, etc.) may be further localized. At block 830, the detected face is extracted. At block 840, user attributes from the extracted are recognized at user recognition module 604, as discussed above.

At block 850, the avatar models are ranked by integrating attribute and similarity scores. At block 860, avatar models are sorted by the similarity scores. At block 870, the sorted scores are displayed at display 230 as a list. In one embodiment, a static snapshot of each model is displayed instead of the animated model in order to save bandwidth. In such an embodiment, the user can select a snapshot to load the model to check the model's dynamic actions.

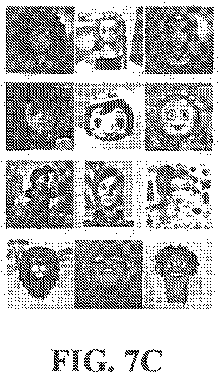

An exemplary avatar application that implements avatar recommendation module 209 may involve a user operating the avatar application on a mobile device to open an avatar store to select a model. Subsequently, recommendation module 209 recognizes the different user attributes and ranks models by the integrated scores. The tailored list is then displayed on the screen. **Figure 7C** illustrates one embodiment of a list of displayed avatars provided by recommendation module 209. As sown in **Figure 7C,** the top of the displayed list includes no sad avatar since the user is smiling now. Further, all female avatars are moved on top position, while male avatar figures are moved to the lower positions.

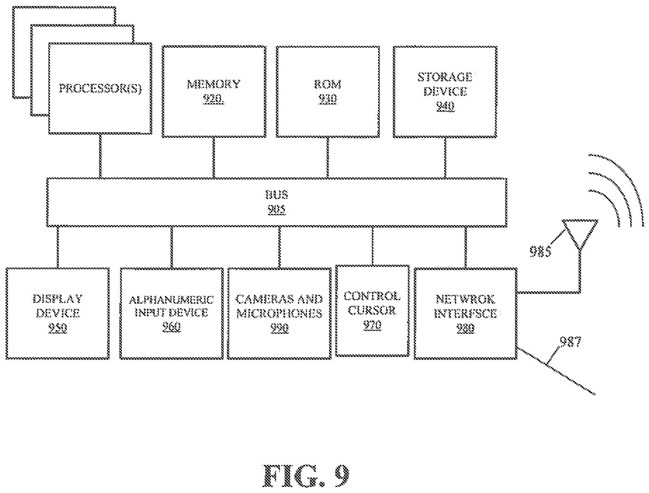

**Figure 9** illustrates computer system 900 suitable for implementing embodiments of the present disclosure according to one embodiment. Computer system 900 includes bus 905 (or, for example, a link, an interconnect, or another type of communication device or interface to communicate information) and processor 910 coupled to bus 905 that may process information. While computing system 900 is illustrated with a single processor, electronic system 900 and may include multiple processors and/or co-processors, such as one or more of central processors, graphics processors, and physics processors, etc. Computing system 900 may further include random access memory (RAM) or other dynamic storage device 920 (referred to as main memory), coupled to bus 805 and may store information and instructions that may be executed by processor 910. Main memory 920 may also be used to store temporary variables or other intermediate information during execution of instructions by processor 910.

Computing system 900 may also include read only memory (ROM) and/or other storage device 930 coupled to bus 905 that may store static information and instructions for processor 910. Date storage device 940 may be coupled to bus 905 to store information and instructions. Date storage device 940, such as magnetic disk or optical disc and corresponding drive may be coupled to computing system 900.

Computing system 900 may also be coupled via bus 905 to display device 950, such as a cathode ray tube (CRT), liquid crystal display (LCD) or Organic Light Emitting Diode (OLED) array, to display information to a user. User input device 960, including alphanumeric and other keys, may be coupled to bus 905 to communicate information and command selections to processor 910. Another type of user input device 960 is cursor control 970, such as a mouse, a trackball, a touchscreen, a touchpad, or cursor direction keys to communicate direction information and command selections to processor 910 and to control cursor movement on display 950. Camera and microphone arrays 990 of computer system 900 may be coupled to bus 905 to observe gestures, record audio and video and to receive and transmit visual and audio commands.

Computing system 900 may further include network interface(s) 980 to provide access to a network, such as a local area network (LAN), a wide area network (WAN), a metropolitan area network (MAN), a personal area network (PAN), Bluetooth, a cloud network, a mobile network (e.g., 3$^{rd}$ Generation (3G), etc.), an intranet, the Internet, etc. Network interface(s) 980 may include, for example, a wireless network interface having antenna 985, which may represent one or more antenna(e). Network interface(s) 980 may also include, for example, a wired network interface to communicate with remote devices via network cable 987, which may be, for example, an Ethernet cable, a coaxial cable, a fiber optic cable, a serial cable, or a parallel cable.

Network interface(s) 980 may provide access to a LAN, for example, by conforming to IEEE 802.1 1b and/or IEEE 802.1 1g standards, and/or the wireless network interface may provide access to a personal area network, for example, by conforming to Bluetooth standards. Other wireless network interfaces and/or protocols, including previous and subsequent versions of the standards, may also be supported.

In addition to, or instead of, communication via the wireless LAN standards, network interface(s) 980 may provide wireless communication using, for example, Time Division, Multiple Access (TDMA) protocols, Global Systems for Mobile Communications (GSM) protocols, Code Division, Multiple Access (CDMA) protocols, and/or any other type of wireless communications protocols.

Network interface(s) 980 may include one or more communication interfaces, such as a modem, a network interface card, or other well-known interface devices, such as those used for coupling to the Ethernet, token ring, or other types of physical wired or wireless attachments for purposes of providing a communication link to support a LAN or a WAN, for example. In this manner, the computer system may also be coupled to a number of peripheral devices, clients, control surfaces, consoles, or servers via a conventional network infrastructure, including an Intranet or the Internet, for example.

It is to be appreciated that a lesser or more equipped system than the example described above may be preferred for certain implementations. Therefore, the configuration of computing system 900 may vary from implementation to implementation depending upon numerous factors, such as price constraints, performance requirements, technological improvements, or other circumstances. Examples of the electronic device or computer system 900 may include without limitation a mobile device, a personal digital assistant, a mobile computing device, a smartphone, a cellular telephone, a handset, a one-way pager, a two-way pager, a messaging device, a computer, a personal computer (PC), a desktop computer, a laptop computer, a notebook computer, a handheld computer, a tablet computer, a server, a server array or server farm, a web server, a network server, an Internet server, a work station, a mini-computer, a main frame computer, a supercomputer, a network appliance, a web appliance, a distributed computing system, multiprocessor systems, processor-based systems, consumer electronics, programmable consumer electronics, television, digital television, set top box, wireless access point, base station, subscriber station, mobile subscriber center, radio network controller, router, hub, gateway, bridge, switch, machine, or combinations thereof.

Embodiments may be implemented as any or a combination of one or more microchips or integrated circuits interconnected using a parentboard, hardwired logic, software stored by a memory device and executed by a microprocessor, firmware, an application specific integrated circuit (ASIC), and/or a field programmable gate array (FPGA). The term "logic" may include, by way of example, software or hardware and/or combinations of software and hardware.

Embodiments may be provided, for example, as a computer program product which may include one or more machine-readable media having stored thereon machine-executable instructions that, when executed by one or more machines such as a computer, network of computers, or other electronic devices, may result in the one or more machines carrying out operations in accordance with embodiments described herein. A machine-readable medium may include, but is not limited to, floppy diskettes, optical disks, CD-ROMs (Compact Disc-Read Only Memories), and magneto-optical disks, ROMs, RAMs, EPROMs (Erasable Programmable Read Only Memories), EEPROMs (Electrically Erasable Programmable Read Only Memories), magnetic or optical cards, flash memory, or other type of media/machine-readable medium suitable for storing machine-executable instructions.

Moreover, embodiments may be downloaded as a computer program product, wherein the program may be transferred from a remote computer (e.g., a server) to a requesting computer (e.g., a client) by way of one or more data signals embodied in and/or modulated by a carrier wave or other propagation medium via a communication link (e.g., a modem and/or network connection).

## Claims

1. An apparatus (100) to facilitate dynamic selection of avatars for use in software applications, comprising:

   reception and capturing logic module (201) to capture, by a camera in real-time, an image of a user;
   detection/tracking logic module (203) to determine facial features of the user based on the user image ;
   an avatar selection module comprising:

      a user recognition module to recognize user attributes based on the user facial features;

a ranking module to receive user attribute data and rank available avatar models based on similarity scores between user attributes and avatar attributes, for each available avatar model;
an avatar recommendation module to recommend an avatar based on the ranked available avatar models and generate a list of ranked available avatar models for display on a display device.

2. The apparatus of claim 1, wherein the avatar selection module comprises:

a profile acquisition module to acquire profile information for the user and one or more recipients;
a context engine to acquire information related to current circumstances of the user and the one or more recipients;
a content analyzer to analyze content of a message between the user and the one or more recipients to determine sentiment and interpersonal dynamics; and
an avatar determination module to select an avatar based on the profile information acquired by the context engine and the sentiment and interpersonal dynamics determined by the content analyzer.

3. The apparatus of claim 2, wherein the profile acquisition module extracts information from one or more social network sources.

4. The apparatus of claim 3, wherein the avatar determination module infers intent of the user based on the information from one or more social network sources as a factor in selecting the avatar.

5. The apparatus of claim 3, wherein the avatar determination module selects the avatar based on social influences shared by the sender and one or more recipients.

6. The apparatus of claim 2, wherein the avatar determination module matches words in text from the content analyzer against the social network sources to select a topically relevant avatar.

7. The apparatus of claim 2, wherein the avatar determination module selects the avatar based on a social situation of a recipient.

8. The apparatus of claim 2, wherein the avatar determination module receives image data or text data from the one or more recipients and selects the avatar based on perceived emotional reactions of the one or more recipients.

9. A method to facilitate dynamic selection of avatars for use in software applications, comprising:

capturing (810), in real-time, by a camera an image of a user;
determining (830) facial features of the user based on the image of the user;
recognizing (840) user attributes based on the determined user facial features;
receiving user attribute data and ranking (850) available avatar models based on similarity scores between user attributes and avatar attributes, for each available avatar model;
recommending an avatar based on the ranked available avatar models; and
generating (860) a list of ranked available avatar models for display on a display device.

10. The method of claim 9, wherein the attributes include at least one of profile information for a user and one or more recipients, information related to current circumstances of the user and the one or more recipients, facial attributes of a user.

11. The method of claim 10, further comprising:

analyzing content of a message between the user and the one or more recipients to determine sentiment and interpersonal dynamics; and
selecting an avatar based on the attributes and the content of the message.

12. The method of claim 11, further comprising:

monitoring facial attributes of the one or more recipients; and
receiving text data from the one or more recipients; and
selecting an updated avatar based on the facial attributes text data from the one or more recipients.

13. At least one machine-readable medium comprising a plurality of instructions that in response to being executed on a computing device, causes the computing device to carry out operations according to any one of claims 9 to 12.

**Patentansprüche**

1. Einrichtung (100) zum Ermöglichen einer dynamischen Auswahl von Avataren zur Verwendung in Softwareanwendungen, die Folgendes umfasst:

ein Empfang-und-Erfassung-Logikmodul (201) zum Erfassen, durch eine Kamera in Echtzeit, eines Bildes eines Benutzers;
ein Detektion/Verfolgung-Logikmodul (203) zum Bestimmen von Gesichtsmerkmalen des Benutzers basierend auf dem Benutzerbild;
ein Avatarauswahlmodul, das Folgendes umfasst:

ein Benutzererkennungsmodul zum Erkennen von Benutzerattributen basierend auf den Benutzergesichtsmerkmalen;
ein Einstufungsmodul zum Empfangen von Benutzerattributdaten und Einstufen verfügbarer Avatarmodelle basierend auf Ähnlichkeitsbewertungen zwischen Benutzerattributen und Avatarattributen für jedes verfügbare Avatarmodell;
ein Avatarempfehlungsmodul zum Empfehlen eines Avatars basierend auf den eingestuften verfügbaren Avatarmodellen und Erzeugen einer Liste eingestufter verfügbarer Avatarmodelle zur Anzeige auf einer Anzeigevorrichtung.

2. Einrichtung nach Anspruch 1, wobei das Avatarauswahlmodul Folgendes umfasst:

ein Profilerlangungsmodul zum Erlangen von Profilinformationen für den Benutzer und einen oder mehrerer Empfänger;
eine Kontext-Engine zum Erlangen von Informationen bezüglich aktueller Umstände des Benutzers und des einen oder der mehreren Empfänger;
einen Inhaltsanalysator zum Analysieren von Inhalt einer Nachricht zwischen dem Benutzer und dem einen oder den mehreren Empfängern, um Stimmung und zwischenmenschliche Dynamik zu bestimmen; und
ein Avatarbestimmungsmodul zum Auswählen eines Avatars basierend auf den Profilinformationen, die durch die Kontext-Engine erlangt werden, und der Stimmung und der zwischenmenschlichen Dynamik, die durch den Inhaltsanalysator bestimmt werden.

3. Einrichtung nach Anspruch 2, wobei das Profilerlangungsmodul Informationen aus einer oder mehreren Soziales-Netzwerk-Quellen extrahiert.

4. Einrichtung nach Anspruch 3, wobei das Avatarbestimmungsmodul einen Inhalt des Benutzers basierend auf den Informationen von einer oder mehreren Soziales-Netzwerk-Quellen als ein Faktor beim Auswählen des Avatars ableitet.

5. Einrichtung nach Anspruch 3, wobei das Avatarbestimmungsmodul den Avatar basierend auf sozialen Einflüssen auswählt, die von dem Sender und einem oder mehreren Empfänger geteilt werden.

6. Einrichtung nach Anspruch 2, wobei das Avatarbestimmungsmodul Wörter in Text von dem Inhaltsanalysator mit den Soziales-Netzwerk-Quellen abgleicht, um einen thematisch relevanten Avatar auszuwählen

7. Einrichtung nach Anspruch 2, wobei das Avatarbestimmungsmodul den Avatar basierend auf einer sozialen Situation eines Empfängers auswählt.

8. Einrichtung nach Anspruch 2, wobei das Avatarbestimmungsmodul Bilddaten oder Textdaten von dem einen oder den mehreren Empfängern empfängt und den Avatar basierend auf wahrgenommenen emotionalen Reaktionen des einen oder der mehreren Empfänger auswählt.

9. Verfahren zum Ermöglichen einer dynamischen Auswahl von Avataren zur Verwendung in Softwareanwendungen, das Folgendes umfasst:

Erfassen (810), in Echtzeit durch eine Kamera, eines Bildes eines Benutzers;
Bestimmen (830) von Gesichtsmerkmalen des Benutzers basierend auf dem Benutzerbild;
Erkennen (840) von Benutzerattributen basierend auf den Benutzergesichtsmerkmalen;
Empfangen von Benutzerattributdaten und Einstufen (850) verfügbarer Avatarmodelle basierend auf Ähnlichkeitsbewertungen zwischen Benutzerattributen und Avatarattributen für jedes verfügbare Avatarmodell;
Empfehlen eines Avatars basierend auf den eingestuften verfügbaren Avatarmodellen; und
Erzeugen (860) einer Liste eingestufter verfügbarer Avatarmodelle zur Anzeige auf einer Anzeigevorrichtung.

**10.** Verfahren nach Anspruch 9, wobei die Attribute wenigstens eines von Profilinformationen für einen Benutzer und einen oder mehrere Empfänger, Informationen bezüglich aktueller Umstände des Benutzers und des einen oder der mehreren Empfänger, Gesichtsattribute eines Benutzers beinhalten.

**11.** Verfahren nach Anspruch 10, das ferner Folgendes umfasst:

Analysieren von Inhalt einer Nachricht zwischen dem Benutzer und dem einen oder den mehreren Empfängern, um Stimmung und zwischenmenschliche Dynamik zu bestimmen; und
Auswählen eines Avatars basierend auf den Attributen und dem Inhalt der Nachricht.

**12.** Verfahren nach Anspruch 11, das ferner Folgendes umfasst:

Überwachen von Gesichtsattributen des einen oder der mehreren Empfängern; und
Empfangen von Textdaten von dem einen oder den mehreren Empfängern; und
Auswählen eines aktualisierten Avatars basierend auf den Gesichtsattributen Textdaten von dem einen oder den mehreren Empfängern.

**13.** Maschinenlesbares Medium oder maschinenlesbare Medien, das/die mehrere Anweisungen umfasst/umfassen, die als Reaktion auf eine Ausführung auf einer Rechenvorrichtung die Rechenvorrichtung zum Ausführen von Operationen nach einem der Ansprüche 9 bis 12 veranlassen.

## Revendications

**1.** Appareil (100) pour faciliter la sélection dynamique d'avatars pour une utilisation dans des applications logicielles, comprenant :

un module logique de réception et de capture (201) pour capturer, au moyen d'une caméra, en temps réel, une image d'un utilisateur ;
un module logique de détection/suivi (203) pour déterminer des caractéristiques faciales de l'utilisateur sur la base de l'image d'utilisateur ;
un module de sélection d'avatar comprenant :

un module de reconnaissance d'utilisateur pour reconnaître des attributs d'utilisateur sur la base des caractéristiques faciales d'utilisateur ;
un module de classement pour recevoir des données d'attribut d'utilisateur et pour classer des modèles d'avatar disponibles sur la base de scores de similarité entre des attributs d'utilisateur et des attributs d'avatar, pour chaque modèle d'avatar disponible ;
un module de recommandation d'avatar pour recommander un avatar sur la base des modèles d'avatar disponibles classés et pour générer une liste de modèles d'avatar disponibles classés pour un affichage sur un dispositif d'affichage.

**2.** Appareil selon la revendication 1, dans lequel le module de sélection d'avatar comprend :

un module d'acquisition de profil pour acquérir une information de profil pour l'utilisateur et un ou plusieurs récipiendaires ;
un moteur de contexte pour acquérir une information rapportée à des circonstances courantes de l'utilisateur et des un ou plusieurs récipiendaires ;
un analyseur de contenu pour analyser le contenu d'un message entre l'utilisateur et les un ou plusieurs récipiendaires pour déterminer des dynamiques de points de vue et interpersonnelles ; et

un module de détermination d'avatar pour sélectionner un avatar sur la base de l'information de profil acquise par le moteur de contexte et des dynamiques de points de vue et interpersonnelles déterminées par l'analyseur de contenu.

3. Appareil selon la revendication 2, dans lequel le module d'acquisition de profil extrait de l'information à partir d'une ou de plusieurs sources de réseaux sociaux.

4. Appareil selon la revendication 3, dans lequel le module de détermination d'avatar déduit l'intention de l'utilisateur sur la base de l'information en provenance d'une ou de plusieurs sources de réseaux sociaux en tant que facteur de sélection de l'avatar.

5. Appareil selon la revendication 3, dans lequel le module de détermination d'avatar sélectionne l'avatar sur la base d'influences sociales partagées par l'expéditeur et les un ou plusieurs récipiendaires.

6. Appareil selon la revendication 2, dans lequel le module de détermination d'avatar fait correspondre des mots dans le texte en provenance de l'analyseur de contenu avec les sources de réseaux sociaux pour sélectionner un avatar pertinent sur le plan thématique.

7. Appareil selon la revendication 2, dans lequel le module de détermination d'avatar sélectionne l'avatar sur la base d'une situation sociale d'un récipiendaire.

8. Appareil selon la revendication 2, dans lequel le module de détermination d'avatar reçoit des données d'image ou des données textuelles en provenance des un ou plusieurs récipiendaires et sélectionne l'avatar sur la base de réactions émotionnelles perçues des un ou plusieurs récipiendaires.

9. Procédé pour faciliter la sélection dynamique d'avatars pour une utilisation dans des applications logicielles, comprenant :

   la capture (810), en temps réel, au moyen d'une caméra, d'une image d'un utilisateur ;
   la détermination (830) de caractéristiques faciales de l'utilisateur sur la base de l'image de l'utilisateur ;
   la reconnaissance (840) d'attributs d'utilisateur sur la base des caractéristiques faciales d'utilisateur déterminées ;
   la réception de données d'attribut d'utilisateur et le classement (850) de modèles d'avatar disponibles sur la base de scores de similarité entre des attributs d'utilisateur et des attributs d'avatar, pour chaque modèle d'avatar disponible ;
   la recommandation d'un avatar sur la base des modèles d'avatar disponibles classés ; et
   la génération (860) d'une liste de modèles d'avatar disponibles classés pour un affichage sur un dispositif d'affichage.

10. Procédé selon la revendication 9, dans lequel les attributs incluent au moins une information parmi une information de profil pour un utilisateur et un ou plusieurs récipiendaires, une information rapportée à des circonstances courantes de l'utilisateur et des un ou plusieurs récipiendaires, des attributs faciaux d'un utilisateur.

11. Procédé selon la revendication 10, comprenant en outre :

    l'analyse du contenu d'un message entre l'utilisateur et les un ou plusieurs récipiendaires pour déterminer des dynamiques de points de vue et interpersonnelles ; et
    la sélection d'un avatar sur la base des attributs et du contenu du message.

12. Procédé selon la revendication 11, comprenant en outre :

    la surveillance d'attributs faciaux des un ou plusieurs récipiendaires ; et
    la réception de données textuelles en provenance des un ou plusieurs récipiendaires ; et
    la sélection d'un avatar mis à jour sur la base des attributs faciaux les données textuelles en provenance des un ou plusieurs récipiendaires.

13. Au moins un support lisible par machine comprenant une pluralité d'instructions qui, en réponse à leur exécution sur un dispositif informatique, forcent le dispositif informatique à mettre en œuvre des opérations selon l'une quelconque des revendications 9 à 12.

COMPUTING DEVICE
(E.G., HOST MACHINE)
100

AVATAR SELECTION MECHANISM
110

OPERATING SYSTEM
106

PROCESSOR
102

MEMORY
104

INPUT/OUTPUT (I/O) SOURCES
108

**FIG. 1**

AVATAR DETERMINATION MECHANISM
207

Profile Acquisition
305

Avatar Determination
300

Content Analyzer
308

Context Engine
306

**FIG. 3**

COMPUTING DEVICE
100

AVATAR SELECTION MECHANISM
110

RECEPTION AND CAPTURING
LOGIC
201

DETECTION/TRACKING LOGIC
203

MESHING AND MAPPING
MODULE
205

AVATAR DETERMINATION
MECAHANISM
207

AVATAR RECOMMMENDATION
MECHANSIM
209

COMMUNICATION/COMPATABILITY
LOGIC
219

IMAGE SOURCES
225

DISPLAY
230

DATABASE
240

NETWORK
230

COMPUTING DEVICE
250

DISPLAY DEVICE
255

USER INTERFACE
260

COMMUNICATION LOGIC
265

SENSOR ARRAY
270

FIG. 2

400

RECEIVE ATTRIBUTES
410

ANALYZE ATTRIBUTES
420

PREPARE TEXT BASED MESSAGE
430

ANALYZE MESSAGE CONTENT
440

SELECT AVATAR
450

RENDER AVATAR
460

MAKE MESSAGE AVAILABLE
470

MONITOR RECIPIENT
480

ADJUSTMENTS NECESSARY
490

FIG. 4

**FIG. 5A**

**FIG. 5B**

**FIG. 6**

FIG. 7A

| | | 10 20 | |
|---|---|---|---|
| Gender | Male | | Female |
| Age | | | |
| Skin Color | White | | Dark |
| Hair Color | White | | Dark |
| Hair Length | No | | Long |
| Eyewear | No | | |
| Makeup | No | | |
| Emotion | Sad | | Happy |
| Environment | Outdoor | | Indoor |
| Dress Style | Casual | | Formal |
| Lighting | Dark | | Bright |

Face Shape          Face Appearance(HOG Feature)

FIG. 7B

FIG. 7C

800

```
┌─────────────────────────────┐
│                             │
│   CAPTURE LIVE VIDEO        │
│                      810    │
└─────────────────────────────┘
              │
              ▼
┌─────────────────────────────┐
│                             │
│   LOCATE USER               │
│                      820    │
└─────────────────────────────┘
              │
              ▼
┌─────────────────────────────┐
│                             │
│   EXTRACT FACIAL FEATURES   │
│                      830    │
└─────────────────────────────┘
              │
              ▼
┌─────────────────────────────┐
│                             │
│   RECOGNIZE USER ATTRIBUTES │
│                      840    │
└─────────────────────────────┘
              │
              ▼
┌─────────────────────────────┐
│                             │
│   RANK AVATAR MODELS        │
│                      850    │
└─────────────────────────────┘
              │
              ▼
┌─────────────────────────────┐
│                             │
│   GENERATE LIST             │
│                      860    │
└─────────────────────────────┘
              │
              ▼
┌─────────────────────────────┐
│                             │
│   DISPLAY LIST              │
│                      870    │
└─────────────────────────────┘
```

# FIG. 8

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012190112 A
- US 97768213

- CN 2011072603 W, Yangzhou Du

**Non-patent literature cited in the description**

- **CHI-HYOUNG RHEE et al.** Cartoon-like Avatar Generation Using Facial Component Matching. *International Journal of Multimedia and Ubiquitous Engineering,* 30 July 2013, 69-78